# EUROPEAN PATENT APPLICATION

(11) **EP 2 083 349 A1**
(43) Date of publication of application: **29.07.2009**
(21) Application number: 08290067.1
(22) Date of filing: 25.01.2008
(51) Int. Cl.: G06F 3/048, G06F 3/043

(54) **Touch-sensitive panel**

(71) Applicant: Sensitive Object, 92100 Boulogne Billancourt (FR)
(72) Inventor: Chaine, Sébastien, 94240 L'Hay-les-Roses (FR); Fillon, Thomas, 91600 Savigny-sur-Orge (FR); Pelletier, Sébastien, 92130 Issy les Moulineaux (FR)
(74) Representative: Grünecker, Kinkeldey, Stockmair & Schwanhäusser Anwaltssozietät

(57) **Abstract**

The invention relates to a touch sensitive panel comprising a single interaction means with at least a first and a second interaction area, wherein the interaction means is transparent in the first interaction area, at least one transforming means for transforming a mechanical, in particular pressure, excitation of the at least first and/or second interaction area of the interaction means into respective signals, and a processing means configured to identify the position of the excitation based on the signals. It furthermore relates to a device comprising such touch sensitive panel. It furthermore relates to an improved drag and drop method.

## Description

The invention relates to a touch-sensitive panel and a device comprising the touch-sensitive panel.

EP 1 798 635 A1 discloses a handheld electronic device having a virtual keypad input device, which includes a case, an input apparatus and a processor apparatus disposed on the case. The input apparatus includes a number of vibrational sensors that sense the vibrational results of a contact with the case. Therefrom, the process apparatus determines the location on the case where a contact was made. The case includes a housing and a display including a screen and a cover. The cover of the display is incorporated into the front wall of the case and a portion of that front surface extends across the cover. EP 1 798 635 A1 stipulates that the sensors attached to the case, receive vibrational signals arising from contacts on the cover of the display, and that the processor apparatus determines the location of the contacts such that the display can be turned into a touch-sensitive display.

The proposed structure has the following problem. By providing the vibrational sensors on the housing, the vibrational signals created on the cover of the display have to cross the interface between the cover and the housing. This leads to a deterioration of the signal quality and, furthermore - over time - the properties of the interface change which, in the worst case, make inputs on the display undetectable.

It is therefore the object of the present invention to provide a touch-sensitive panel which overcomes the abovementioned problem and thus, provides a more reliable touch-sensitive panel.

This object is achieved with the touch-sensitive panel according to claim 1. The touch-sensitive panel according to the invention comprises a single interaction means with at least a first and a second interaction area, wherein the interaction means is transparent in the first interaction area, at least one transforming means for transforming a mechanical, in particular a pressure, excitation of the at least first and/or second interaction area of the interaction means into a respective signal, and a processing means configured to identify the position of the excitation based on the signal/signals.

In this context, an interaction means can e.g. be a glass or plastic plate which, according to the invention, is made out of one piece. The interaction means can have a smooth surface on at least one of its main surfaces and the surface can be plane or curved. The transforming means can be a transducer like, for example, a strain gauge or a piezoelectric transducer capable of sensing acoustic signals being the result of an excitation. An excitation can be provided by a finger, a gloved finger, a stylus etc. The processing means can comprise an interface via which action triggering signals can be output. When used in combination with a transducer sensing acoustic signals, the processing means is configured to identify the location of an impact based on the sensed acoustic signals.

When the touch-sensitive panel is working together with a screen, the first interaction area, which is transparent, can render the screen touch sensitive and the second interaction area can be used as a further input means. As both areas are provided on a single interaction means, the signals sensed by the transforming means do not have to pass via an interface and, as a consequence, do not depend on the stability over time of this interface and no degradation of the signal quality due to a change in the interface properties can occur.

The single, one piece, interaction means furthermore has the advantage that a smooth surface can be provided which is easily cleanable compared to a device where a housing at least partially extends across a cover where dust etc. can accumulate in the edge regions. Finally, a smooth surface also renders the visual aspect of the device more attractive.

Preferably the second interaction area can comprise secondary button areas and wherein the processing means can be configured to trigger predetermined actions upon an excitation of at least one of the secondary button areas. These secondary button areas simulate thus switches which can be used to provide further inputs into a device with which the touch-sensitive panel is connected. Another application of the secondary button area relates to its use as touchpad or scroll bar to move e.g. of cursor on a screen connected to the touch sensitive panel. The button areas can, for example, be provided by printing them onto the front or rear surface of the interaction means or by using printed adhesive foils or by directly printing them onto the interaction means. By doing so, it is no additional hardware switches need to be provided.

According to a preferred embodiment, the second interaction area can be opaque. When the panel is used together with a display panel underneath the first interaction area, the opaque second interaction area can hide the frame of the display panel of screen and furthermore the usually unused frame area of a display can be turned into a useful area, namely an additional input means.

Advantageously, the at least one transforming means and/or the processing means can be arranged in the second interaction area. By doing so, they do not obstruct the transparent first interaction area and can preferably be hidden behind the opaque second interaction area thereby also keeping the lateral extension of the device small.

According to a further advantageous variant of the invention, the transforming means and/or the processing means can be embedded in the interaction means, preferably in the region of the second interaction area. By doing so, the volume of the touch-sensitive panel essentially corresponds to the one of the interaction means, so that no space is unnecessarily wasted.

Advantageously, the first interaction area can be positioned on a main surface of the single interaction means and the second interaction area can at least be positioned on at least one side surface of the interaction means. By doing so, not only the main surface side of the interaction means becomes useful for providing inputs, but also an additional input area can be provided on the side surfaces, thereby enhancing the flexibility with respect to input possibilities.

According to an advantageous embodiment, the single interaction means, the at least one transforming means and the processing means can form a module. With this module, any device can be turned into a touch-sensitive device without having to carry out a heavy integration effort. It is simply sufficient to attach the module to the device and to connect the interface of the processing means with the corresponding one of the device to achieve this object.

The object of the invention is also achieved with a device, in particular a laptop, an on-board computer, a mobile phone, a personal digital assistant (PDA), a television, a HiFi device, an automatic vending or teller machine, a playing console or a machine input device, comprising a screen with a display panel and a touch-sensitive panel according to one of the previous claims. Like already mentioned above, the touch-sensitive panel brings the advantage that, the display panel region of the screen can be rendered into a touch-sensitive device reliable in time. In addition, due to the single interaction means, like a glass or plastic plate, a smooth surface without protruding edges is achieved which renders the device easily cleanable and, furthermore, visually attractive.

Preferably, the touch-sensitive panel can be arranged such that the first interaction area is over the display panel of the screen thereby forming a touch-sensitive display and furthermore arranged such that the second interaction area is positioned away from the display panel. Thus, outside the display panel area of the screen, the second interaction area can be used for additional input features.

According to a preferred embodiment, the device can be configured to carry out predetermined actions upon triggering of an excitation at a predetermined area of the second interaction area by the processing means, wherein the action is, in particular linked to information displayed on the screen (soft key action) and/or linked to a hardware functionality. Thus, the second interaction area can be used, for example, to switch on or off the device or switch between different hardware configurations like changing the luminosity or the volume of loud speakers of the device, but can also be used to trigger actions about information displayed on the screen, for example, printing of the screen, or any other kinds of soft key actions or any information in general present or stored in the device. One particular advantage of this feature is that virtually the size of the screen can be enlarged as soft keys do not have to be provided over the display area of the screen anymore. Thus for the same functionality, a smaller screen could, for example, be used rendering the overall device cheaper.

According to a preferred embodiment, the device can be configured to drag an action or object from the display panel of the screen based on a triggered excitation on the first interaction area and to drop the action or object onto a secondary button area of the second interaction area based on the subsequent triggered excitation on the second interaction means. E.g. virtually any object, like an electronic text document, could be dragged away form a computer screen and dropped onto a predetermined position on the second interaction area. Upon detection of an excitation at that position on the second interaction area, the processing unit can trigger a signal which informs the computer to e.g. print the document or to remove it. This again enlarges the flexibility of a device with respect to in and output activities.

According to a preferred embodiment, the second interaction area can only extend over the area of the frame of the display panel. In particular, the interaction means also does not extend over the frame of the display panel. By doing so, not only a visually attractive design can be achieved, but the usually non-used frame area of the display can be turned into a useful area without having to enlarge the size of the device.

According to an advantageous variant, the interaction means can extend laterally on at least one side over the device. In this case, also the second interaction area could extend laterally over the device. By doing so, the device could, for example, be embedded into a piece of furniture with the interaction means being flush mounted with the surface of that piece of furniture so that, due to the large area of the interaction means, an enlarged input area can be provided. This enlarged input area could, for example, be used to provide enlarged buttons to facilitate the input, for example for people with viewing deficiencies, or simply additional buttons can be provided to facilitate the inputting of information.

According to an advantageous embodiment, the device can be configured to carry out a scroll bar functionality in the screen based on excitations identified on at least one of the side surfaces of the interaction means. As already mentioned above, not only the main surface side of the interaction means can be turned into a useful area, but also the side or even the back side could be used as further input areas. With respect to today's electronic devices usually having a navigational possibility in the screen, the provision of a scroll bar on the side of the device is intuitive and keeps the overall device size small as, the scroll functionality does not need to be provided on the main surface side.

The invention furthermore relates to a drag and drop method. In this context the drag and drop feature relates to a method known in the context of graphical user interfaces of e.g. computer (a display panel of the computer screen) and which consists in clicking on a virtual object, like the icon of a text document, and dragging it to a different location on the graphical user interface or onto another virtual object, e.g. the printer icon or the trashcan icon, of the graphical user interface. Starting from the known drag and drop feature linked to the presence of one or more graphical user interfaces, it is the object of the present invention to improve the drag and drop method.

This object is achieved with the method according to claim 15. In this method a step of dragging an object is carried out on a first location and the dropping of the object is carried out at a second location characterized in that one of the first and second location is over a graphical user interface and the other one outside any graphical user interface. With this method the drag and drop feature is not limited to the size of the screen or screens anymore which renders its use more flexible in any device using the drag and drop feature.

The invention furthermore relates to the use of the above described devices to carry out the drag and drop method according to the invention. However, according to another variant, the inventive drag and drop method can also be realised using an interaction means build up out of more than one part. According to a further advantageous the plurality of parts of the interaction means are spaced apart.

Advantageous embodiments of the invention will be described in detail in relation to the accompanying Figures.
Figure 1 illustrates a 3-dimensional schematic view of a first embodiment of a touch-sensitive panel according to the invention,
Figure 2 illustrates a side-cut view of a second embodiment of the touch-sensitive panel according to the invention,
Figures 3a and 3b illustrate a device comprising a third and fourth embodiment of the touch-sensitive panel according to the invention,
Figure 4 illustrates a laptop computer comprising a touch-sensitive panel module according to the invention,
Figure 5 illustrates one inventive application of a touch-sensitive panel, and
Figure 6 illustrates a second inventive application.

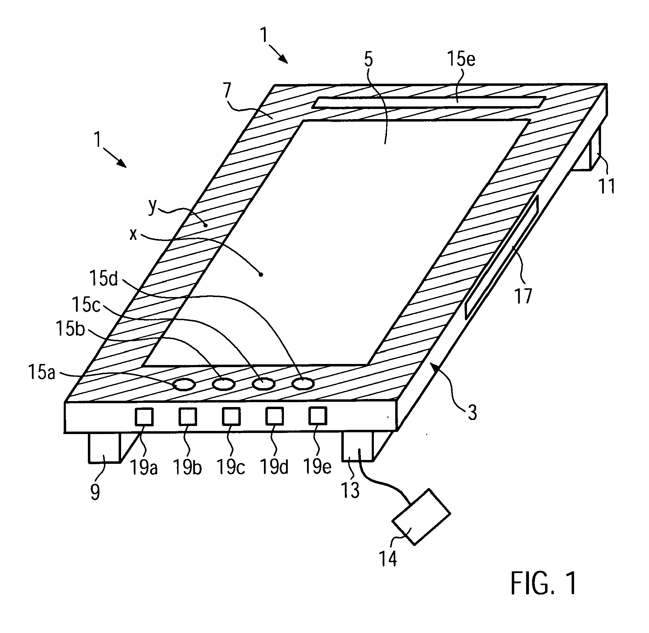

Figure 1 illustrates a touch-sensitive panel 1 according to a first embodiment of the invention. It comprises an interaction means 3 with a first 5 and a second interaction area 7. In the first interaction area 5, the interaction means 3 is transparent. The second interaction area 7 is opaque for visible light, however, according to other variants it could also be transparent or partially transparent without departing from the scope of the invention. In this embodiment, the interaction means 3 is a glass plate, but it could also be made out of plastic or other suitable material. In this embodiment it is a plane plate, but the interaction means 3 could also have a curved shape,

The touch-sensitive panel 1 furthermore comprises two transforming means 9 and 11 for transforming a mechanical, in particular pressure, excitation on the front side of the interaction means 3, indicated by a "x" on the first interaction area 5 and a "y" on the second interaction area 7, into respective signals. In this embodiment, the transforming means 9 and 11 are transducers, like for example strain gauges or piezoelectric transducers, which are capable of sensing the acoustic signals being the result of the excitation at location "x" or "y". In this embodiment, two transforming means 9 and 11 are illustrated, however, it is also possible to provide touch-sensitive panels with more than two transforming means or with even only one.

The two transforming means 9 and 11 are linked with a processing means 13 which, based on the electric signals, identifies the positional coordinates of excitation "x" or "y" respectively. The processing means 13 can transmit the coordinates of the excitation to another device (not shown) via an interface connection 14. In this embodiment, the processing means is attached to the interaction means 3, which is however not mandatory.

The transforming means 9 and 11 are linked with the processing means via wires (not shown) which are, for example, printed on the back side of the interaction means 3.

Like already mentioned, the second interaction area 7 is opaque with respect to visible light. This is realized by providing an opaque film on the back side of the interaction means 3. Such an opaque film could be attached using an adhesive or directly printed onto the interaction means 3.

Furthermore, in this embodiment, the transforming means 9 and 11, as well as the processing means 13, are attached on the backside of the interaction means 3 in the second interaction area 7. Thus, they are not visible for a user looking to the front side of the touch-sensitive panel 1.

In the second interaction area 7, secondary button areas 15a-15d are provided on the front main surface on the interaction means 3 and additional secondary button areas 17 and 19a - 19e are provided on two of the side walls of the interaction means 3. Of course, these secondary button areas could also be provided on the other sides of the interaction means which are not visible in the 3-D view of figure 1. According to further variants, secondary button areas might only be provided on the sides or only be provided on the front surface. According to even another variant, secondary button areas could also be provided on the back side, thus the side where the transforming means 9 and 11 are arranged, if necessary.

The secondary button areas can be rendered visible to a user by attaching a film to the front surface or by printing them to the front surface or by integrating them into the opaque film on the back side. They can be of any shape - circular, squared, rectangular, star shaped, etc..

Furthermore, the processing means 13 is configured such that, upon excitations of secondary button areas 15a - 15e, 17, 19a - 19e, and following the identification of the location of the excitations, the processing means can trigger a signal at the interface 14 so that, with this trigger signal, actions could be carried when the touch-sensitive panel 1 is in contact with a further device.

According to the invention, the interaction means 3 with its transparent first interaction area and the second interaction area 5, 7, is made out of a single piece. This has the advantage that, using the transforming means 9 and 11, excitations occurring on the entire surface of the single interaction means 3, thus in the first and/or second interaction areas, can be captured based on the acoustic waves originating from the excitation and the location of the excitation then be identified by the processing means 13. As there is no interface between the transparent part of the first interaction area 5 and the second interaction area 7, there is no degradation in the signal quality and, furthermore, the signals stay stable in time. In addition, the visual perception of this interaction means is attractive and, due to the smooth surface, such an interaction means 3 can be easily cleaned.

The touch-sensitive panel 1, according to the first embodiment, is realized as an independent module which can be simply attached to any device using, for example, an adhesive layer and, via the interface 14, can be connected to a corresponding interface of that device to render a screen of such device tactile.

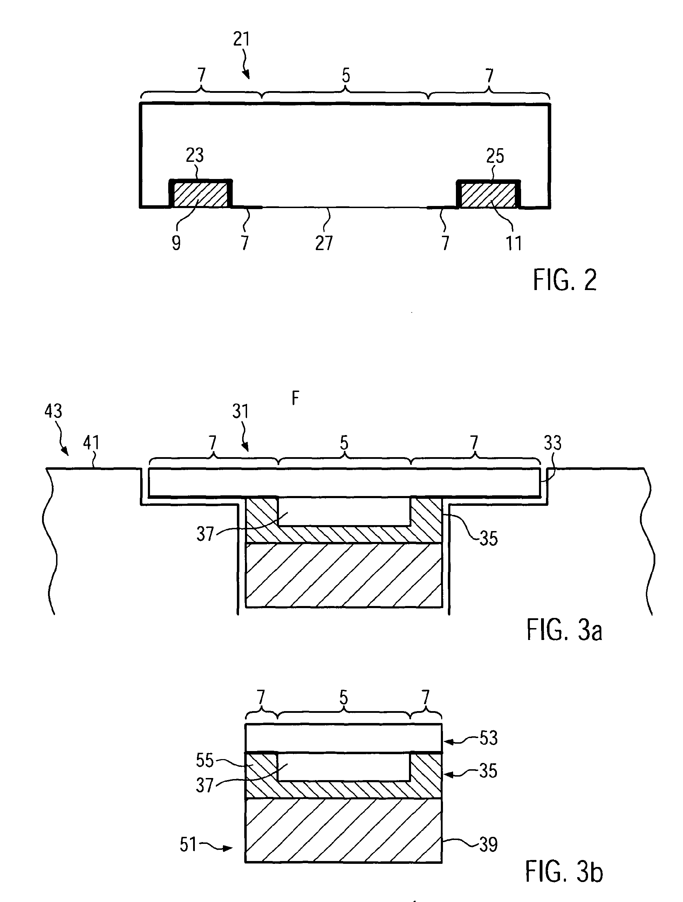

Figure 2 illustrates a side-cut view of a touch-sensitive panel 21 according to the invention. Features carrying the same reference numerals like in Figure 1 are not described in detail again, but their description is incorporated herewith by reference. The only difference between the touch-sensitive panel 21 according to the second embodiment and the touch-sensitive panel 1 according to the first embodiment is that, in the second embodiment, the transforming means 9 and 11 are arranged in recesses 23 and 25 in the second interaction area 7 on the backside of the single interaction means 27 which, apart from the recesses 23 and 25, has the same features as the single interaction means 3 of the first embodiment. The volume of the recess is chosen such that the interaction means 9 and 11 and/or the processing means 13 do not protrude anymore from the back side surface of the interaction means 27. As indicated by the bold lines in the figure the opaque foil is also attached to the backside.

This embodiment has the advantage that, no additional elements protrude from the interaction means 3 thereby rendering the module easy to integrate into devices. In the side-cut view illustrated in Figure 2, the processing means 13 is not illustrated. Of course, when attached to the interaction means 27, the processing means 13 can be arranged in a corresponding recess.

Figure 3a illustrates a third embodiment on the invention. It illustrates a device 31 comprising a touch-sensitive panel 33 according to the first or second embodiment, which is attached to a electronic device 39 with a screen 35 having a display panel 37.

This device 31 could, for example, be a laptop, an on-board computer, a mobile phone, a personal digital assistant, a television, a HiFi device, an automatic vending or teller machine, a playing console or a machine input device which becomes touch sensitive due to the use of the touch sensitive panel 33.

The particularity of this embodiment is that the touch-sensitive panel 33 extends laterally over the sides of the screen 35 and the electronic device 39. According to the invention, the touch-sensitive panel 33 has its transparent first interaction area 5 aligned with the display panel 37 of the screen 35 and its opaque second interaction area 7 arranged away from the display panel 37.

This device 31 could be incorporated into a piece of furniture or a dashboard panel such that the front surface of the device 31 represented by the touch-sensitive panel 33, can be flush mount with the surface 41 of the piece of furniture or dashboard panel 43. This device 31 provides additional input surfaces on the second interaction area 7 and can be nicely integrated into the surface of the piece of furniture or dashboard 43, eventually also by providing a curved surface.

Figure 3b illustrates a fourth embodiment of a device 51 according to the invention. Device 51 comprising a touch-sensitive panel 53, according to the first or second embodiment of the invention, and an electronic device 39 with a screen 35 with a display panel 37 having the same properties as in the third embodiment.

In contrast to the third embodiment, here the size of the touch-sensitive panel 53 is chosen such that it extends only over the area of the screen 35, at least in one dimension. The first interaction area 5 is again aligned with the display panel 37 - in particular in both dimensions. The second interaction area 7 is aligned with the frame 55 of screen 35. In this configuration, the unused frame area of screen 35 is turned into an area useful for inputting activities, e.g. by using the secondary button areas (see figure 1).

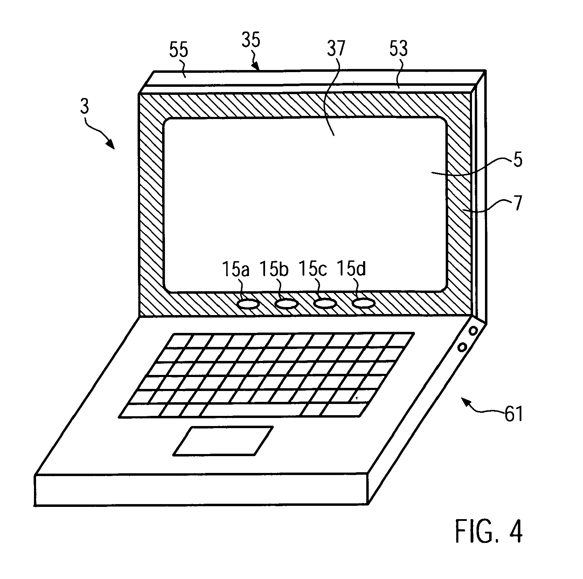

Figure 4 illustrates a practical example of the invention. It shows a laptop computer 61 comprising a touch-sensitive panel 53 according to the fourth embodiment on the invention. As can be seen, the touch-sensitive panel 53 is flush mount with the screen 35 such that the first interaction area 5 of the touch sensitive panel 53 is arranged over the display panel 37 of screen 35 and the second interaction area 7 with secondary button area 15a - 15d is arranged over the frame 55 of screen 35. Secondary buttons 15a and 15d are configured as additional input means, for example button 15a can be configured such that, upon its excitation by a user, the computer is turned on (hard key functionality) and buttons 15b - 15d can be linked to soft key actions like connecting to the internet, printing a document etc..

According to a further variant, the second interaction area comprises a secondary button in the form of a trackpad area and wherein the processing means 13 are configured to output signals representing the coordinates on the trackpad area following an excitation. This information can then be used to move the cursor on the display panel 37 of the screen 35.

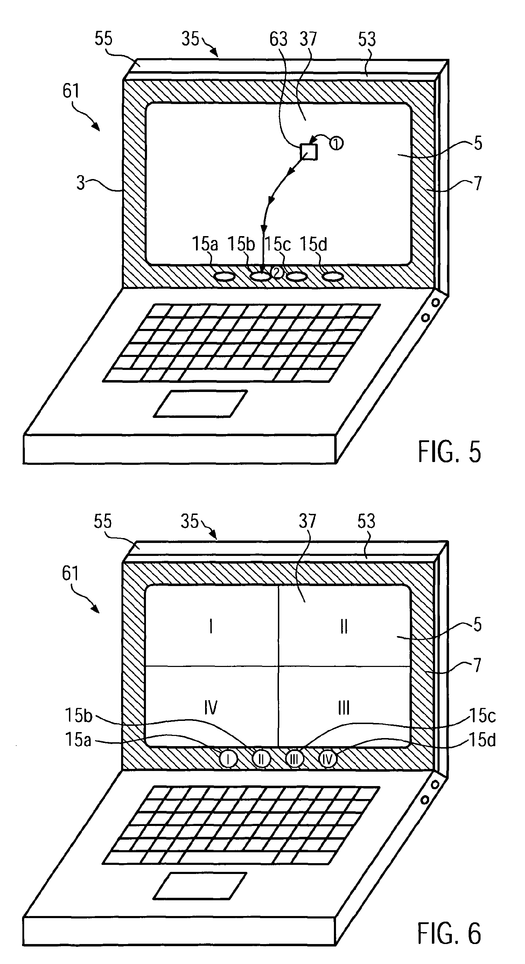

Figure 5 illustrates a "drag and drop" embodiment according to the invention. Figure 5 again shows the inventive device 61, already illustrated in Figure 4. In this embodiment, device 61, for example the processing means 13 of the touch-sensitive panel 53, is configured such that, upon an excitation at position 1 on the first interaction area 5 of the touch-sensitive panel 53, a document 63 present on the display panel 37 of the screen 35 of the laptop 61 is chosen and, via a sliding action on the surface of the interaction means 3 of the touch-sensitive panel 53, the document 63 is dragged in the direction of the secondary button area 15b on the second interaction area 7 of the touch-sensitive panel 53. The lift-off action of the finger of a user at that position can be identified by the processing means 13 (not shown) due to particularities in the signal and interpreted as a drop off action, leading, for example, to a print out of the document. Thus, by doing so, it becomes possible to combine the screen with an additional virtual input surface thereby enlarging the in- and output areas of the screen itself.

The inventive drag and drop method is not limited to the presence of a one part interaction means, but can also be applied to interaction means build up out of a plurality of parts. Eventually, in this case, the various parts could also be spaced apart.

Figure 6 illustrates an additional application in which the laptop computer 61 with the sensitive panel 53 is configured such that the display is split into four regions I - IV and secondary buttons 15a - 15d are configured such that, upon an input at one of these locations, the corresponding area of the touch screen becomes enlarged to cover the entire display panel surface 37.

The applications illustrated in Figures 5 and 6 are not limited to use in a laptop computer but can be realized with any device like described above.

Above the invention has been described for an application in which acoustic waves are analysed to identify the location of an excitation in the first and/or second interaction area. Nevertheless, the invention is not limited to this particular touch screen technology, but could also applied to other technologies, like resistive or capacitive touch screen technologies, using other kinds of transforming means, e.g. ITO layers, acoustic reflectors, photoreceptors ....

## Claims

1. Touch sensitive panel comprising:
- a single interaction means (3) with at least a first and a second interaction area (5, 7), wherein the interaction means (3) is transparent in the first interaction area, (5)
- at least one transforming means (9, 11) for transforming a mechanical, in particular pressure, excitation of the at least first and/or second interaction area (5, 7) of the interaction means (3) into a respective signal, and
- a processing means (13) configured to identify the position of the excitation based on the signal/signals.

2. Touch sensitive panel according to claim 1, wherein the second interaction area (7) comprises secondary button areas (15a, 15e, 17, 18a - 19e) and wherein the processing means (13) is configured to trigger predetermined actions upon an excitation of at least one of the secondary button areas (15a, 15e, 17, 18a - 19e).

3. Touch sensitive panel according to claim 1 or 2, wherein the second interaction area (7) is opaque.

4. Touch sensitive panel according to one of claims 1 to 3, wherein the at least one transforming means (9, 11) and/or the processing means (13) are arranged in the second interaction area (7).

5. Touch sensitive panel according to one of claims 1 to 4, wherein the transforming means (9, 11) and/or the processing means (13) are embedded in the interaction means (3), preferably in the second interaction area (7).

6. Touch sensitive panel according to one of claims 1 to 5, wherein the first interaction area (5) is positioned on a main surface of the single interaction means (3) and the second interaction area (7) is at least positioned on at least one side surface of the interaction means (3).

7. Touch sensitive panel according to one of claims 1 to 6, wherein the single interaction means (3), the at least one transforming means (9, 11) and the processing means (13) form a module.

8. Touch sensitive device, in particular a laptop, an on-board computer, a mobile phone, a personal digital assistant (PDA), a television, a HiFi device, an automatic vending or teller machine, a playing console or a machine input device, comprising a screen (35) with a display panel (37) and a touch sensitive panel according to one of claims 1 to 7.

9. Device according to claim 8, wherein the touch sensitive panel is arranged such that the first interaction area (5) is over the display panel (37) of the screen (35) thereby forming a touch sensitive display and such that the second interaction area (7) is positioned away from the display panel (37).

10. Device according to claim 8 or 9, configured to carry out predetermined actions upon triggering by the processing means (13) of an excitation at a predetermined area of the second interaction area (7), wherein the action is in particular linked to information displayed on the screen (35) (soft key action) and/or linked to a hardware functionality.

11. Device according to one of claims 8 to 10, configured to drag an action from the screen (35) based on a triggered excitation on the first interaction area (5) and to drop the action onto a secondary button area of the second interaction area (7) based on a subsequent triggered excitation on the second interaction means.

12. Device according to one of claims 8 to 11, wherein the second interaction area (7) only extends over the area of the frame (55) of the display panel (37).

13. Device according to one of claims 8 to 12, wherein the interaction means extends laterally on at least one side over the device.

14. Device according to one of claims 8 to 13, configured to carry out a scroll bar functionality in the screen based on excitations identified on at least one of the side surfaces of the interaction means (3).

15. Drag and Drop method, wherein the step of dragging an object is carried out on a first location (63) and the dropping of the object is carried out at a second location (15b) **characterized in that** one of the first and second location is over a graphical user interface and the other one outside any graphical user interface.

16. Use of a touch sensitive panel according to one of claims 1 to 7 to carry out the method according to claim 15.

17. Use of a device according to one of claims 8 to 14 to carry out the method according to claim 15.
